# EUROPEAN PATENT SPECIFICATION

(11) **EP 3 441 204 B1**
(45) Date of publication and mention of the grant of the patent: **02.08.2023**
(21) Application number: 18179208.6
(22) Date of filing: 22.06.2018
(51) Int. Cl.: B25J 13/08, B23Q 7/04, B23Q 17/00

(54) **LOADING DEVICE AND METHOD TOOL USING THE SAME**
LADEVORRICHTUNG UND VERFAHRENSWERKZEUG ZUR VERWENDUNG DAVON
DISPOSITIF DE CHARGEMENT ET PROCÉDÉ D'UTILISATION L'UTILISANT

(30) Priority: 27.06.2017 JP 2017125402
(43) Date of publication of application: 13.02.2019
(73) Proprietor: Nakamura-Tome Precision Industry Co., Ltd, Hakusan, Ishikawa 920-2195 (JP)
(72) Inventor: SAKAI, Tomoki, Hakusan, Ishikawa 920-2195 (JP)
(74) Representative: Wunderlich & Heim Patentanwälte Partnerschaftsgesellschaft mbB

(56) References cited:
- EP-A1- 2 390 067
- EP-A2- 2 982 474
- WO-A1-2008/067846
- DE-A1- 3 813 708
- DE-A1- 19 947 997
- DE-A1-102015 012 779
- DE-U1- 29 602 216
- JP-A- H 068 098
- JP-A- H02 243 280
- JP-A- H03 131 488
- JP-A- S61 164 755
- US-B2- 6 705 186

## Description

The present invention relates to a machine tool using a loading device for delivery of a workpiece to and from the spindle of the machine tool according to claim 1.

Machine tools such as lathes and complex processing machines have a chuck for gripping a workpiece at the leading end of a rotationally driven spindle.

Loading devices delivering a workpiece to and from the spindle also have a chuck for gripping the workpiece.

These chucks have dogs as detected sections for detecting the open end and closed end of chuck jaws. After the chuck of the spindle completely grips a workpiece, the chuck jaws of the chuck provided in the loading device are opened. The open end of the chuck jaws is detected by detecting the dogs, and then the chuck in the loading device is moved.

However, to improve the throughput of a machine tool, it is required to further shorten the loading time.

In addition, it is difficult to detect a malfunction such as reduction in the opening and closing speed of the chuck jaws only by detecting the open end and closed end of the chuck jaws.

JP-A-2005-186191 describes that five proximity switches are provided at specific intervals along the stroke direction of a piston rod in a cylinder opening and closing chuck jaws on a spindle to detect dogs at the rear end of the piston rod. This makes it possible to detect dogs located at positions other than the both stroke ends of the piston rod.

However, a plurality of proximity switches arranged at specific intervals over the movement range of the dogs reciprocating together with the piston rod cannot be adopted in a loading device delivering a workpiece to and from the spindle of a machine tool due to space limitations.

The document DE 296 02 216 U1 discloses a gripping device with a housing, in which a central receiving hole and a lateral longitudinal recess are provided. In the recess sensors can be arranged for detecting end positions of a gripping unit being provided in the receiving hole. As sensors hall sensors or mechanical switches can be used.

Another gripping device is known from DE 199 47 997 A1. The gripping device comprises jaws being moveable by linearly movable pistons, one of which includes a magnet to be detected by a sensor arrangement. The rod-like sensor arrangement comprises two end sensors and one intermediate sensor for detecting end positions and one intermediate position.

A machine tool with a control unit is disclosed in US 6,705,186 B2.

DE 3 813 708 A1 discloses robotic grippers in which the opening positions of the gripper fingers may be continuously monitored by means of Hall-sensor between a fully opened and a fully closed position of the gripper. An operator of the disclosed robot gripper may set different opening positions for the gripper fingers which then may selectively grip differently sized workpieces. If an operator would set two positions corresponding to a gripping and a releasing position of a workpiece, he would not find any hint to start a movement mechanism, such as the wrist or an arm of a robot, dependent on a position lying between the set two positions associated to the selected workpiece.

DE 10 2015 012 779 A1 shows a comparable robotic gripper in which the fingers are controlled by an electric motor. The angular position of the electric motor is sensed by a Hall sensor.

In the robotic gripper of EP 2 390 067 A1 two positions may be detected, wherein a fully open position and a gripping position is detected defining a range for gripping a workpiece. A third position lying outside the former range represents the gripper in its fully closed position in which no work piece is gripped.

An object of one aspect of the present invention is to provide a machine tool using a loading device that reduces time loss and shortens the loading time for delivering a workpiece to and from a spindle of the machine tool.

The object is solved by a machine tool with a loading device with the features of claim 1. Preferred embodiments are defined in the dependent claims.

According to the invention, there is provided a loading device comprising a chuck chucking a workpiece on chuck jaws that are opened and closed, and a movement mechanism moving the chuck and delivering the workpiece to and from a spindle of a machine tool,
a sensor being provided to detect a continuously changing signal depending on an open-end position of the chuck jaws, a closed-end position of the chuck jaws, and movement position between the open-end position and the closed-end position,
the movement mechanism being configured to move the chuck when the chuck jaws are in the movement position, based on an output from the sensor.

The sensor here refers to any sensor that can detect a signal continuously changing depending on the positions of open end to closed end of the chuck jaws, which may be of a contact type in contact with the detected section or a non-contact type. The sensor is preferably a digital sensor that converts a continuously changing analog signal into a digital signal and outputs the same. The principle of detection by the sensor may be to detect a change in a magnetic field or a capacity depending on the positon of the detected section or detect reflection of a laser beam, infrared ray, or ultrasonic wave. Among them, a single sensor detecting a change in a magnetic field depending on the position of the detected section (magnetic body) is compact and inexpensive, and also favorably achieves a positional resolution of 1 mm or less even though the detected section has a relatively short movement range of 10 to 20 mm, for example.

According to the loading device, based on the output from the sensor, when the chuck jaws are in a movement position before reaching the movement-completed position as the open-end position from the closed-end position, the movement mechanism can start the movement of the chuck as the next process.

According to a conventional loading device, after a workpiece is chucked by the spindle, the chuck in the loading device needs to be held on standby until the opening of the chuck jaws in the loading device is completed. This causes time loss by the standby state of the loading device. According to one aspect of the present invention, before the completion of opening of the chuck jaws in the loading device is detected, the loading device can move to the next process to shorten the time of delivery of a workpiece and improve the efficiency of the loading.

The present invention relates to a machine tool that has a spindle and a loading device. The loading device includes a first chuck and the spindle includes a second chuck. In this case, a first sensor identical to the sensor described above may be provided in the first chuck and a second sensor identical to the sensor described above may be provided in the second chuck.

This makes it possible to start the movement of the first chuck by the movement mechanism based on a signal for detecting the closed-end position from one of the first and second sensors provided on one of the first and second chucks to receive a workpiece and a signal for detecting the movement from the closed-end positon to the movement position from the other of the first and second sensors provided on the other of the first and second chucks to pass the workpiece. This makes it possible to shorten the loading time both when the loading device passes a workpiece and when the loading device receives a workpiece.

In still another aspect of the present invention, the movement distance of the chuck jaws is acquired based on the output from the sensor and the movement time is acquired from a time measurement section to detect the opening and closing speed of the chuck jaws.

This makes it possible to detect reduction in the opening and closing speed of the chuck jaws and replace the parts in advance. In addition, it is possible to detect early the abnormal opening and closing of the chuck jaws and the lifetime of the chuck jaws.

### BRIEF DESCRIPTION OF THE DRAWINGS

FIG. 1 is a diagram illustrating a spindle-opposed turning center as an example of a complex machine tool to which the present invention is applied.
FIGs. 2A and 2B are diagrams illustrating a structure example of a loading device for use in the present invention, and FIG. 2C is a diagram illustrating opening and closing motion of chuck jaws, the motion of the chuck jaws, and a movement instruction to a movement mechanism.
FIG. 3 is a diagram illustrating the chuck jaws, a reciprocating drive section, and a sensor that are provided in a chuck, and a controller into which the output from the sensor is input.
FIG. 4 is a diagram illustrating an example of a sensor that detects a continuously changing signal depending on the position of a detected section.
FIG. 5 is a block diagram of a control system in the machine tool that performs control based on the output from the sensor.
FIGs. 6A and 6B are diagrams illustrating a state in which the loading device passes a workpiece to a spindle, and FIG. 6C is a diagram illustrating a state in which, after the start of opening of the chuck jaws, the loading device moves directly.
FIG. 7A is a diagram illustrating a state in which, after completion of processing of the workpiece on a spindle L, a spindle R moves to receive the workpiece, and FIG. 7B is a diagram illustrating a state in which the spindle R processes the workpiece.
FIGs. 8A and 8B are diagrams illustrating a state in which the loading device receives the completed workpiece from the spindle R.
FIG. 9 is a diagram illustrating a single-spindle turning center as another example of a complex machine tool to which the present invention is applied.

### DESCRIPTION OF EXEMPLARY EMBODIMENTS

Exemplary embodiments of the invention are described in detail below. Note that the following embodiments do not in any way limit the scope of the invention defined by the claims laid out herein. Note also that all of the elements described in connection with the following embodiments should not necessarily be taken as essential elements of the invention.

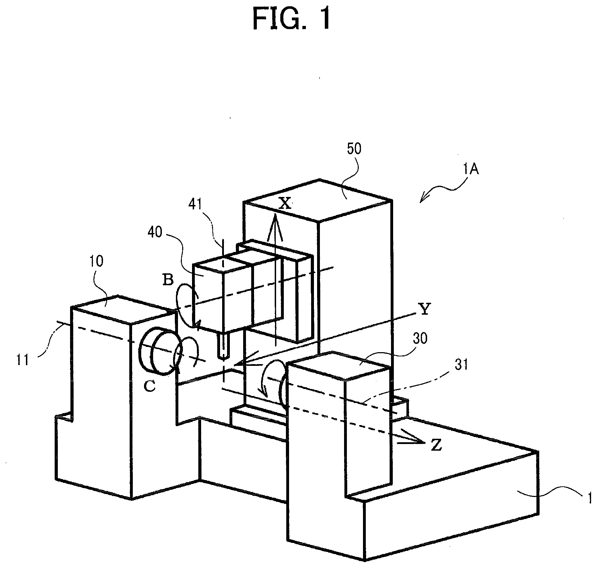

FIG. 1 illustrates schematically a machine tool to which the present invention is applied. FIG. 1 illustrates a double-spindle-opposed turning center 1A in which right and left spindles are laterally opposed to each other. However, FIG. 1 does not illustrate a loading device. Referring to FIG. 1, a workpiece (not shown) is held and rotated by a left spindle 11 and/or a right spindle 31 controlled along a C axis. A tool attached to a tool spindle 41 is capable of translational motion along X, Y, and Z axes orthogonal to one another (crossing in a board sense), and is capable of rotational motion around a B axis. The spindle 11 is rotatably supported on a headstock 10, and the spindle 31 is rotatably supported on a headstock 30. The tool spindle 41 is rotatably supported on a tool post 40. A movable carriage 50 is provided in a manner capable of translational motion in the Y- and Z-axis directions with respect to a base 1. The tool post 40 is supported movably in the X-axis direction with respect to the movable carriage 50.

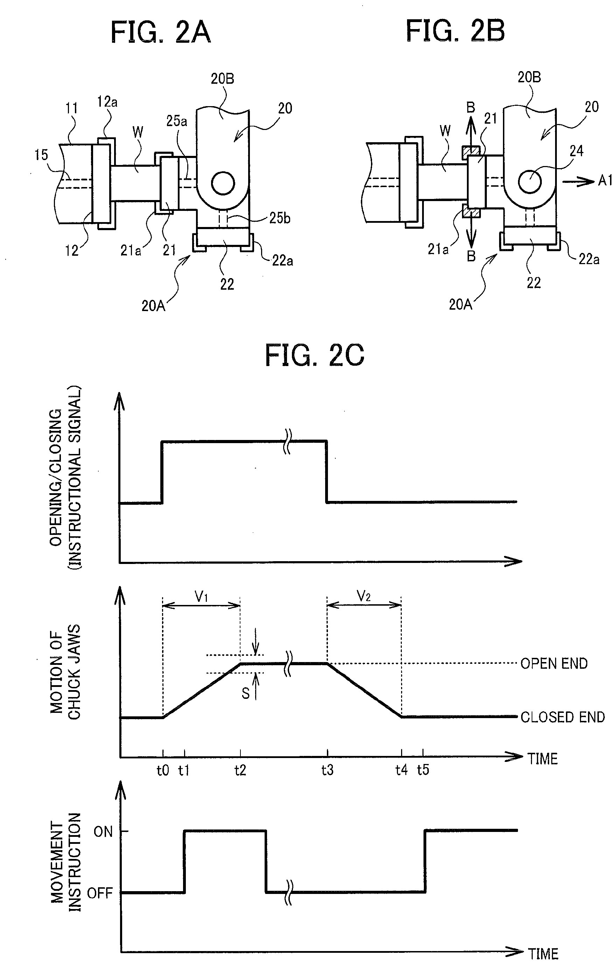

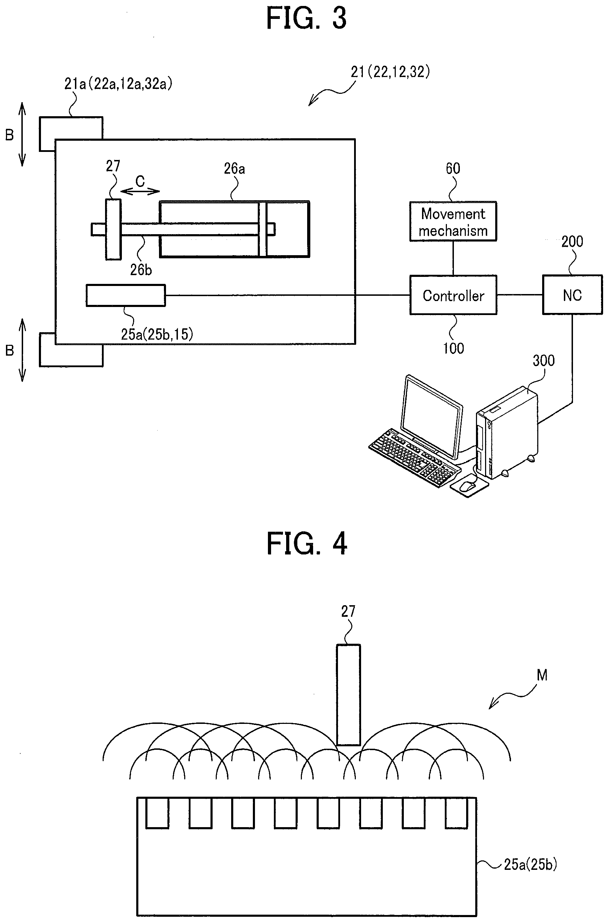

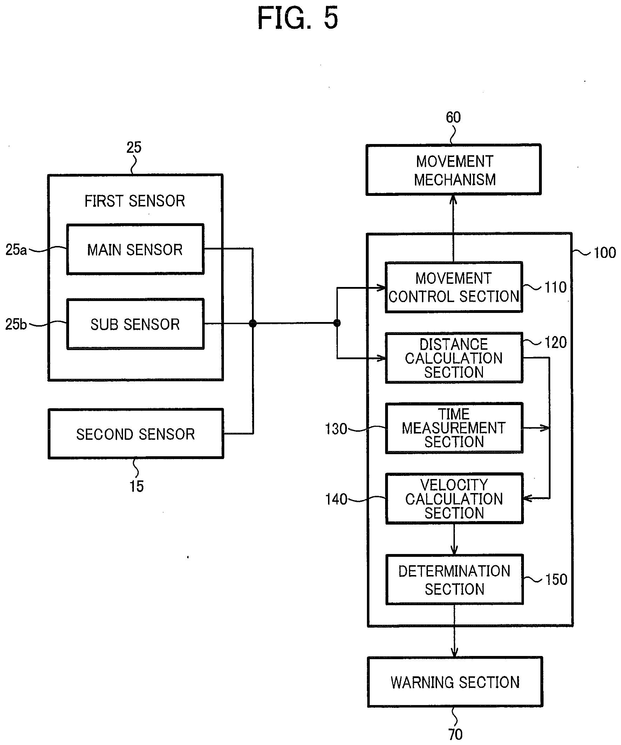

FIG. 2A illustrates an example of a loading device of the machine tool 1A. A loading device 20 is included as auxiliary equipment in the machine tool 1A. The loading device 20 includes a chuck 20A that chucks a workpiece W, an arm 20B that supports the chuck 20A, and a movement mechanism 60 (not illustrated in FIG.2A but illustrated in FIGs 3 and 5) that moves the arm 20B at least in the X-axis direction and the Z-axis direction.

Referring to FIG. 2A, the L-shaped chuck (also called first chuck) 20A, with a main chuck 21 and a sub chuck 22 arranged in a direction at right angles to each other, is turnably coupled to the leading end of the arm 20B by a shaft 24.

The main chuck 21 is switched between an open state in which the workpiece W can be delivered and a closed state in which the workpiece W is gripped, for example, by widening or narrowing three main chuck jaws 21a in a radial direction. The sub chuck 22 also has three sub chuck jaws 22a.

The main chuck jaws 21a include a sensor, for example, a digital sensor 25a that can continuously detect the fully-open state, the fully-closed state, and the intermediate state. The sub chuck jaws 22a also include a digital sensor 25b. The main chuck jaws 21a and the sub chuck jaws 22a will be collectively called first chuck jaws. The digital sensors 25a and 25b will be collectively called first sensor.

Referring to FIG. 2A, the spindle 11 is provided with a second chuck 12. The second chuck 12 has three second chuck jaws 12a that chuck the workpiece W, for example. The second chuck jaws 12a can also be provided with a second sensor, for example, a digital sensor 15 that can continuously detect the fully-open state, the fully-closed state, and the intermediate state.

FIG. 2A illustrates schematically a state in which the workpiece W is delivered from the main chuck 21 of the loading device 20 to the chuck 12 of the spindle 11. FIG. 2B illustrates schematically a state in which the main chuck jaws 21a are slightly opened in an arrow direction B under an instruction for opening the main chuck jaws 21a and the chuck 20A in the loading device 20 starts to move in an arrow direction A1 away from the workpiece W. FIG. 2C illustrates a signal for opening and closing the main chuck jaws 21a, the motion of the main chuck jaws 21a, and an movement instruction to a movement mechanism 60.

For example, upon an instructional signal for opening the main chuck jaws 21a, the main chuck jaws 21a starts to change from the fully-closed state to the fully-open state at a time t0 illustrated in FIG. 2C, the main chuck jaws 21a move in opening directions B as illustrated in FIG. 2B. The movement of the main chuck jaws 21a is detected by the digital sensor 25a.

When the digital sensor 25a detects the movement of the main chuck jaws 21a from the closed-end position at a time t1 after the time t0 illustrated in FIG. 2C, a movement instruction is output to the movement mechanism 60 so that the chuck 20A in the loading device 20 starts to move in the arrow direction A1 away from the workpiece W as illustrated in FIG. 2B.

Accordingly, the chuck 20A in the loading device 20 can start to move to the next process at the time t1 earlier than a time t2 when the main chuck jaws 21a reach the open-end position. As a result, time loss can be reduced by the time (t2 - t1) to shorten the loading time.

FIG. 3 illustrates schematically an example of the main chuck 21. The main chuck 21 includes a reciprocating drive section, for example, a cylinder 26a and a piston rod 26b that drive the main chuck jaws 21a to an open or closed state, and a dog 27 as a detected section that is provided on the piston rod 26b, for example. FIG. 3 does not illustrate a mechanism that transforms orthogonally the reciprocating linear motion of the piston rod 26b into an opening/closing action of the main chuck jaws 21a in the opening/closing directions. The main sensor 25a is connected to a controller 100. The controller 100 controls the movement mechanism 60. For example, the controller 100 outputs the movement instruction to make the chuck 20A to start to move in the Z-axis direction based on an output from the sensor 25a. The controller 100 may be connected to a numerical controller (NC) 200 that controls and performs processing of the workpiece W in accordance with a program upon completion of loading action of the loading device 20 based on the signal from the controller 100. The NC 200 may be connected to a personal computer (PC) 300, preferably the touch-panel PC. The PC 300 can perform data processing, display of processed data, data communication with other devices, and the like.

FIG. 4 illustrates an example of the main sensor 25a. The main sensor 25a illustrated in FIG. 4 forms a magnetic field M by a plurality of coils built in the sensor body over the reciprocating range of the dog 27 to detect continuous changes in the magnetic field depending on the position of the dog 27. The main sensor 25a can detect the position of the dog 27 with a positional resolution of 1 mm or less even though the reciprocating range of the dog 27 is as short as 10 to 20 mm, for example.

In the embodiment, the sub chuck 22 of the first chuck 20A can also have the structure illustrated in FIG. 3 and the sub sensor 25b can also have the structure illustrated in FIG. 4.

FIG. 5 is a block diagram of a control system in the machine tool 1A. Referring to FIG. 5, a controller 100 has a movement control section 110 that provides a movement instruction as illustrated in FIG. 2C to a movement mechanism 60 that moves the arm section 20B of the loading device 20 at least in the X- and Z-axis directions. The movement control section 110 is connected to the main sensor 25a and the sub sensor 25b constituting the first sensor 25 and the second sensor 15.

The controller 100 can have a distance calculation section 120 connected to the main sensor 25a and the sub sensor 25b constituting the first sensor 25 and the second sensor 15. The distance calculation section 120 calculates the movement distance of the dog 27 provided on one of the first and second chucks 20A and 12 based on the output from one of the first and second sensors 25 and 15. The controller 100 can have a time measurement section 130 and a velocity calculation section 140. The velocity calculation section 140 accepts an input of time from the time measurement section 130 (for example, times t0, t2, t3, and t4 illustrated in FIG. 2C) and the distance calculated by the distance calculation section 120 (for example, the distance between the open-end position and closed-end position illustrated in FIG. 2C). The velocity calculation section 140 can calculate the velocity of the dog 27 (for example, velocities V1 and V2 illustrated in FIG. 2C) provided on one of the first and second chucks 20A and 12 based on the input time and distance. The distance calculation section 120 can also detect a scope S of the open-end position or closed-end position illustrated in FIG. 2C.

In such a manner as described above, the opening and closing motion of the chuck jaws 12a, 21a, and 22a can be continuously detected by the digital sensors 15 and 25, which allows precision control based on the opened and closed positions of the chuck jaws 12a, 21a, and 22a. Further, a determination section 150 determines the velocity detected by the velocity calculation section 140 so that it is easy to discover an abnormality in opening and closing of the chuck jaws 12a, 21a, and 22a. In the event of an abnormality, a warning section 70 connected to the determination section 150 can warn the abnormality by an alarm or the like. In addition, the determination section 150 can predict the time for parts replacement based on a temporal change of the opening and closing time and notify the time for parts replacement by the warning section 70.

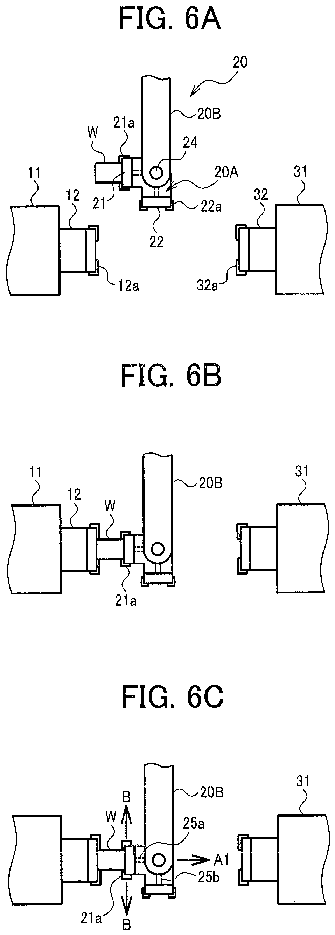

FIGs. 6A to 8B illustrate examples of actions of the double-spindle-opposed lathe illustrated in FIG. 1 to which the loading device according to the present invention is applied. A right spindle 31 illustrated in the drawings includes a chuck 32 with chuck jaws 32a opened or closed. The chuck 32 has the same structure as illustrated in FIGs. 3 and 4. Specifically, the chuck 32 is also provided with a digital sensor. The timing chart illustrated in FIG. 2C is also applicable to the actions of chuck jaws 12a, 21a, and 22a described below.

As illustrated in FIG. 6A, the spindle 11 and spindle 31 are opposed to each other on a Z-axis line. At least one of the two spindles 11 and 31, for example, the spindle 31 is controlled along the Z-axis direction in forward and backward movements. Referring to FIG. 6A, a workpiece W is held by the main chuck (first chuck) 21 of the loading device 20.

As illustrated in FIG. 6B, the workpiece W gripped by the first chuck 21 of the loading device 20 is delivered to the chuck jaws 12a of the second chuck 12 in the spindle 11.

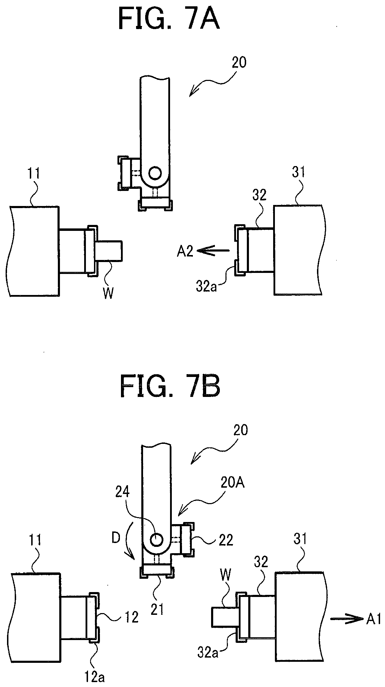

When the fully-closed state of the chuck jaws 12a of the second chuck 12 is detected, an instruction for opening the first chuck 21 in the loading device 20 is output at the time t0 illustrated in FIG. 2C. Without waiting for the chuck jaws 21a of the first chuck 21 to reach the open-end position, the loading device 20 moves in the direction A1 away from the workpiece W as illustrated in FIG. 6C at the time t1 illustrated in FIG. 2C. Further, as illustrated in FIG. 7A, the loading device 20 is evacuated upward.

Upon completion of processing of the workpiece W using the cutter rest 40 illustrated in FIG. 1, the spindle 31 moves forward in an arrow A2 direction as illustrated in FIG. 7A to receive the workpiece W. In that instance, at the time t3 illustrated in FIG. 2C, an instruction for closing is output to the chuck 32 of the spindle 31. At the time t4 illustrated in FIG. 2C, the workpiece W is gripped by the chuck jaws 32a.

After that, an instruction for opening is output to the chuck jaws 12a of the chuck 12 in the spindle 11. Then, the digital sensor 15 in the chuck 12 detects the positions of the chuck jaws 12a during movement from the closed-end position to the open-end position. Without waiting for the chuck jaws 12a of the chuck 12 to reach the open-end position, the spindle 32 moves in the arrow A1 direction away from the spindle 11 as illustrated in FIG. 7B at a time t5 illustrated in FIG. 2C. Accordingly, in the same manner as described above, the time for loading the workpiece W from the spindle 11 to the spindle 31 can be shortened. The spindle 31 moves backward to the original position.

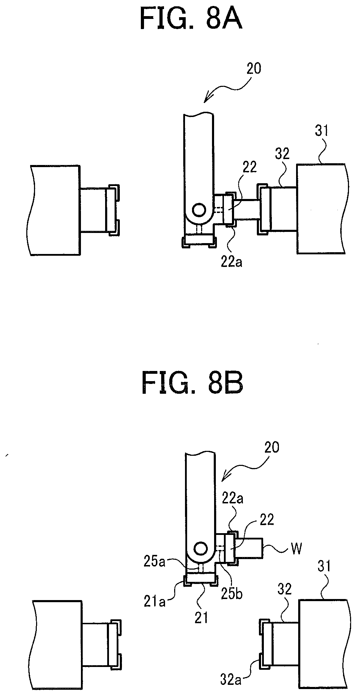

Before completion of processing of the workpiece W gripped by the spindle 31 using the cutter rest 40 illustrated in FIG. 1, the chuck 20A in the loading device 20 rotates 90° in an arrow D direction around the shaft 24 as illustrated in FIG. 7B. After that, the sub chuck 22 with the sub chuck jaws 22a receives the processed workpiece W as illustrated in FIG. 8A. Then, the processed workpiece W is conveyed by the loading device 20 as illustrated in FIG. 8B. In that instance, the loading device 20 can move in the direction away from the workpiece W (Z-axis direction) without waiting for the chuck jaws 32a of the chuck 32 to reach the open-end position. Accordingly, the loading time for delivering the workpiece W from the spindle 31 to the loading device 20 can be shortened as well.

As described above, applying the loading device according to the present invention to a machine tool makes it possible to shorten the time for loading the workpiece W and improve productivity.

Although only some embodiments of the present invention have been described in detail above, those skilled in the art will readily appreciate that many modifications are possible without departing from the scope of the invention as defined in the appended claims.

For example, the present invention is applied to a double-spindle-opposed lathe in the embodiment but is not limited to this. The present invention is also applicable to various machine tools with a loading device.

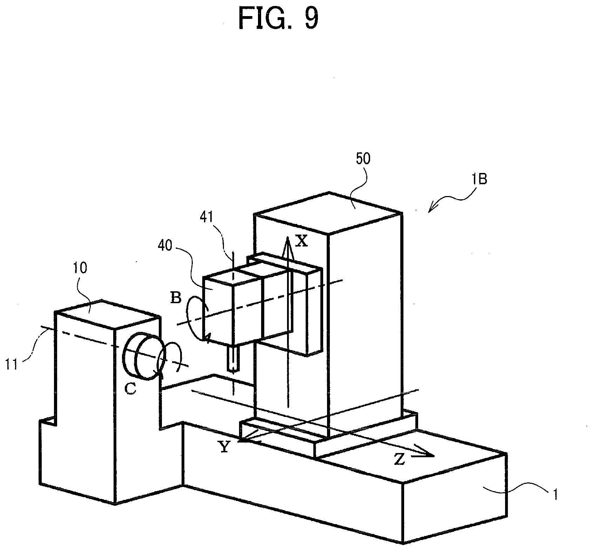

FIG. 9 illustrates schematically another machine tool to which the present invention is applied. FIG. 9 illustrates a single-spindle turning center 1B with the loading device 20 illustrated in FIG. 2A. In the turning center 1B as well, the spindle 11 and the loading device 20 can be provided with the digital sensor illustrated in FIGs. 3 and 4.

## Claims

1. A machine tool comprising:
a spindle (11); and
a loading device delivering a workpiece (W) to and from the spindle (11),
the loading device (20) including a first chuck (21) chucking the workpiece (W) on first chuck jaws (21a) that are opened and closed, and a movement mechanism (60) moving the first chuck (21),
the spindle (11) including a second chuck (12) chucking the workpiece (W) on second chuck jaws (12a) that are opened and closed, **characterized by**
the first chuck (21) having:
a first sensor (25a) detecting a continuously changing signal depending on an open-end position of the first chuck jaws (21a), a closed-end position of the first chuck jaws (21a), and a movement position between the open-end position and the closed-end position; and
a controller (100) outputting a movement instruction to the movement mechanism (60) for starting to move the first chuck (21) when the first chuck jaws (21a) are in the movement position while moving from the closed-end position to the open-end position, based on an output from the first sensor (25a).

2. The machine tool as defined in claim 1,
the first chuck (21) further having:
a first reciprocating drive section driving the first chuck jaws (21a) to an open or closed state; and
a first detected section provided on the first reciprocating drive section,
the first sensor (25a) detecting the position of the first detected section within a reciprocating range of the first detected section.

3. The machine tool as defined in claim 2,
the second chuck (12) having a second sensor (15) detecting a continuously changing signal depending on an open-end position of the second chuck jaws (12a), a closed-end position of the second chuck jaws (12a), and a movement position between the open-end position and the closed-end position.

4. The machine tool as defined in claim 3,
the second chuck (12) further having:
a second reciprocating drive section driving the second chuck jaws (12a) to an open or closed state; and
a second detected section provided on the second reciprocating drive section,
the second sensor (15) detecting the position of the second detected section within a reciprocating range of the second detected section.

5. The machine tool as defined in claim 3 or 4,
the controller (100) outputting the movement instruction to the movement mechanism (60) based on a signal for detecting the closed-end position from one of the first and second sensors provided on one of the first and second chucks (21, 12) to receive the workpiece (W) and a signal for detecting the movement from the closed-end position to the movement position from the other of the first and second sensors (25a, 15) provided on the other of the first and second chucks (21, 12) to pass the workpiece (W).

6. The machine tool as defined in any one of claims 3 to 5,
the controller (100) including:
a time measurement section (130);
a distance calculation section (120) calculating a movement distance of one of the first and second detected sections based on an output from one of the first and second sensors (25, 15); and
a velocity calculation section (140) calculating the velocity of one of the first and second detected sections based on outputs from the time measurement section (130) and the distance calculation section (120).

## Patentansprüche

1. Werkzeugmaschine mit:
einer Spindel (11); und
einer Ladevorrichtung, die ein Werkstück (W) zu und von der Spindel (11) liefert, wobei die Ladevorrichtung (20) ein erstes Spannfutter (21), welches das Werkstück (W) an den ersten Spannbacken (21a) einspannt, die geöffnet und geschlossen werden, und einen Bewegungseinrichtung (60) aufweist, die das erste Spannfutter (21) bewegt,
wobei die Spindel (11) ein zweites Spannfutter (12) aufweist, welches das Werkstück (W) an den zweiten Spannbacken (12a) einspannt, die geöffnet und geschlossen werden,
**dadurch gekennzeichnet,**
**dass** das erste Spannfutter (21) aufweist:
einen ersten Sensor (25a), der ein sich kontinuierlich änderndes Signal abhängig von einer geöffneten Endposition der ersten Spannbacken (21a), einer geschlossenen Endposition der ersten Spannbacken (21a) und einer Bewegungsposition zwischen der geöffneten Endposition und der geschlossenen Endposition erfasst; und
eine Steuerung (100), die basierend auf einer Ausgabe des ersten Sensors (25a) einen Bewegungsbefehl an die Bewegungseinrichtung (60) ausgibt zum Starten der Bewegung des ersten Spannfutters (21), wenn sich die ersten Spannbacken (21a) in der Bewegungsposition befinden, während sie sich von der geschlossenen Endposition in die geöffnete Endposition bewegen.

2. Werkzeugmaschine nach Anspruch 1,
wobei das erste Spannfutter (21) ferner aufweist:
einen ersten reversierenden Antriebsabschnitt, welcher die ersten Spannbacken (21a) in einen offenen oder geschlossenen Zustand bewegt; und
einen ersten Erfassungsabschnitt, der an dem ersten reversierenden Antriebsabschnitt vorgesehen ist,
wobei der erste Sensor (25a) die Position des ersten erfassten Abschnitts innerhalb eines reversierenden Bereiches des ersten erfassten Abschnitts erfasst.

3. Werkzeugmaschine, wie in Anspruch 2 definiert,
wobei das zweite Spannfutter (12) einen zweiten Sensor (15) aufweist, der ein sich kontinuierlich änderndes Signal abhängig von einer geöffneten Endposition der zweiten Spannbacken (12a), einer geschlossenen Endposition der zweiten Spannbacken (12a) und einer Bewegungsposition zwischen der geöffneten Endposition und der geschlossenen Endposition erfasst.

4. Werkzeugmaschine, wie in Anspruch 3 definiert,
wobei das zweite Spannfutter (12) ferner aufweist:
einen zweiten reversierenden Antriebsabschnitt, der die zweiten Spannbacken (12a) in einen geöffneten oder geschlossenen Zustand bewegt; und
einen zweiten Erfassungsabschnitt, der an dem zweiten reversierenden Antriebsabschnitt vorgesehen ist,
wobei der zweite Sensor (15) die Position des zweiten erfassten Abschnitts innerhalb eines reversierenden Bereichs des zweiten erfassten Abschnitts erfasst.

5. Werkzeugmaschine, wie in Anspruch 3 oder 4 definiert,
wobei die Steuerung (100) die Bewegungsanweisung an die Bewegungseinrichtung (60) ausgibt, basierend auf einem Signal zum Erfassen der geschlossenen Endposition von einem der ersten und zweiten Sensoren, die an einem von dem ersten und zweiten Spannfutter (21, 12) zur Aufnahme des Werkstücks (W) vorgesehen ist, und auf einem Signal zum Erfassen der Bewegung von der geschlossenen Endposition in die Bewegungsposition von dem anderen von den ersten und zweiten Sensoren (25a, 15), die an dem anderen der ersten und zweiten Spannfutter (21, 12) zum Passieren des Werkstück (W) vorgesehen ist.

6. Werkzeugmaschine, wie in einem der Ansprüche 3 bis 5 definiert,
wobei die Steuerung (100) aufweist:
einen Zeitmessabschnitt (130);
einen Abstandsberechnungsabschnitt (120), der einen Bewegungsabstand eines von dem ersten und zweiten erfassten Abschnitt basierend auf einer Ausgabe von einem der ersten und zweiten Sensoren (25, 15), und
einen Geschwindigkeitsberechnungsabschnitt (140), der die Geschwindigkeit eines von dem ersten oder zweiten erfassten Abschnitt basierend auf den Ausgaben des Zeitmesabschnitts (130) und des Abstandsberechnungsabschnitts (120) berechnet.

## Revendications

1. Machine-outil comprenant :
une broche (11) ; et
un dispositif de chargement acheminant une pièce (W) vers et depuis la broche (11),
le dispositif de chargement (20) incluant un premier dispositif de serrage (21) serrant la pièce (W) sur des premières mâchoires de serrage (21a) qui s'ouvrent et se ferment, et un mécanisme de déplacement (60) déplaçant le premier dispositif de serrage (21),
la broche (11) incluant un second dispositif de serrage (12) serrant la pièce (W) sur des secondes mâchoires de serrage (12a) qui s'ouvrent et se ferment,
**caractérisée en ce que**
le premier dispositif de serrage (21) possède :
un premier capteur (25a) détectant un signal de changement continu dépendant d'une position d'extrémité ouverte des premières mâchoires de serrage (21a), d'une position d'extrémité fermée des premières mâchoires de serrage (21a) et d'une position de déplacement entre la position d'extrémité ouverte et la position d'extrémité fermée ; et
un dispositif de commande (100) délivrant une instruction de déplacement au mécanisme de déplacement (60) pour commencer à déplacer le premier dispositif de serrage (21) lorsque les premières mâchoires de serrage (21a) se trouvent dans la position de déplacement tandis qu'elles passent de la position d'extrémité fermée à la position d'extrémité ouverte, sur la base d'une sortie provenant du premier capteur (25a).

2. Machine-outil selon la revendication 1,
le premier dispositif de serrage (21) possédant en outre :
une première section d'entraînement en va-et-vient entraînant les premières mâchoires de serrage (21a) jusqu'à un état ouvert ou fermé ; et
une première section détectée située sur la première section d'entraînement en va-et-vient,
le premier capteur (25a) détectant la position de la première section détectée dans une plage de va-et-vient de la première section détectée.

3. Machine-outil selon la revendication 2,
le second dispositif de serrage (12) possède un second capteur (15) détectant un signal de changement continu dépendant d'une position d'extrémité ouverte des secondes mâchoires de serrage (12a), d'une position d'extrémité fermée des secondes mâchoires de serrage (12a) et d'une position de déplacement entre la position d'extrémité ouverte et la position d'extrémité fermée.

4. Machine-outil selon la revendication 3,
le second dispositif de serrage (12) possédant en outre :
une seconde section d'entraînement en va-et-vient entraînant les secondes mâchoires de serrage (12a) jusqu'à un état ouvert ou fermé ; et
une seconde section détectée située sur la seconde section d'entraînement en va-et-vient,
le second capteur (15) détectant la position de la seconde section détectée dans une plage de va-et-vient de la seconde section détectée.

5. Machine-outil selon la revendication 3 ou 4,
le dispositif de commande (100) délivrant l'instruction de déplacement au mécanisme de déplacement (60) sur la base d'un signal pour détecter la position d'extrémité fermée de l'un des premier et second capteurs situé sur l'un des premier et second dispositifs de serrage (21, 12) pour recevoir la pièce (W) et d'un signal pour détecter le déplacement depuis la position d'extrémité fermée jusqu'à la position de déplacement depuis l'autre des premier et second capteurs (25a, 15) situé sur l'autre des premier et second dispositifs de serrage (21, 12) pour faire passer la pièce (W).

6. Machine-outil selon l'une quelconque des revendications 3 à 5,
le dispositif de commande (100) incluant :
une section de mesure de temps (130) ;
une section de calcul de distance (120) calculant une distance de déplacement de l'une des première et seconde sections détectées sur la base d'une sortie provenant de l'un des premier et second capteurs (25, 15) ; et
une section de calcul de vitesse (140) calculant la vitesse de l'une des première et seconde sections détectées sur la base de sorties provenant de la section de mesure de temps (130) et de la section de calcul de distance (120).
